# EUROPEAN PATENT SPECIFICATION

(11) **EP 2 253 598 B1**
(45) Date of publication and mention of the grant of the patent: **14.05.2014**
(21) Application number: 10163558.9
(22) Date of filing: 21.05.2010
(51) Int. Cl.: C03B 17/06

(54) **Apparatus for reducing radiative heat loss from a forming body in a glass forming process**
Vorrichtung zur Reduktion des Strahlungswärmeverlusts eines Formkörpers in einem Glasformverfahren
Appareil de réduction de perte de chaleur radiative à partir d'un corps de formation dans un procédé de formation de verre

(30) Priority: 21.05.2009 US 180216 P
(43) Date of publication of application: 24.11.2010
(73) Proprietor: Corning Incorporated, Corning NY 14831 (US)
(72) Inventor: Delia, Robert, Horseheads, NY 14845 (US)
(74) Representative: Anderson, James Edward George

(56) References cited:
- JP-A- 2 149 437
- US-A- 1 631 805
- US-A1- 2007 068 197

## Description

### TECHNICAL FIELD

This invention is directed to a method of reducing radiative heat loss in a glass making process, and in particular, reducing the radiative heat loss from a wedge-shaped forming body in a down draw process.

### BACKGROUND

The fusion downdraw process is one method used in the glass making art to produce sheet glass. Compared to other processes, e.g., the float and slot draw processes; the fusion process produces glass sheets whose surfaces have superior flatness and smoothness without post forming processing (grinding, polishing, etc.). As a result, the fusion process has become of particular importance in the production of the thin glass substrates, such as those used in the manufacture of liquid crystal displays (LCDs), where surface quality must be stringently controlled.

The fusion process, specifically, the overflow downdraw fusion process, is the subject of commonly assigned U.S. Patents Nos. 3,338,696 and 3,682,609, to Stuart M. Dockerty. As described therein, a glass sheet is formed by overflowing a refractory forming body with a molten glass

In an exemplary fusion downdraw process, a glass melt is supplied to a trough formed in a refractory forming body. The molten glass overflows the top of the trough on both sides of the body to form two half sheets of glass that flow downward and then inward along the outer surfaces of the forming body. The two sheets meet at the bottom or root of the forming body, where they fuse together into a single glass sheet. The single sheet is then fed to drawing equipment. The thickness of the sheet is controlled by, inter alia, the rate at which the sheet is drawn away from the root by the drawing apparatus and by controlling the temperature (viscosity) of the glass.

During the drawing process, the exterior, outward facing surfaces of the final glass sheet will not have contacted the outside surface of the forming body. Rather, these surfaces see only the ambient atmosphere. The inner surfaces of the two half sheets which form the final sheet do contact the forming body, but those inner surfaces fuse together at the root of the isopipe and are thus buried within the body of the final sheet, and the superior properties of the outer surfaces of the final sheet are achieved.

A forming body used in the fusion process is subjected to high temperatures and substantial mechanical loads as the glass melt flows into its trough and over its outer surfaces. To be able to withstand these demanding conditions, the forming body is typically made from an isostatically pressed and sintered block of refractory material. In particular, the forming body may be made from an isostatically pressed zircon refractory, i.e., a refractory composed primarily of ZrO₂ and SiO₂. For example, the forming body can be made of a zircon refractory in which ZrO₂ and SiO₂ together comprise at least 95 wt. % of the material, with the theoretical composition of the material being ZrO₂-SiO₂ or, equivalently, ZrSiO₄.

A source of loss in the manufacture of sheet glass, and particularly for use as LCD substrates, is the presence of zircon crystal inclusions in the glass (referred to herein as "secondary zircon crystals" or "secondary zircon defects" or simply "secondary zircon") as a result of the glass passing into and over the zircon forming body. The problem of secondary zircon crystals becomes more pronounced with devitrification-sensitive glasses that need to be formed at higher temperatures. That is, high liquidus temperature glasses may be more prone to the formation of secondary zircon.

Zircon that results in the secondary zircon crystals found in finished glass sheets has been found to originate at the upper portions of the zircon forming body. In particular, these defects ultimately arise as a result of zirconia (i.e., ZrO₂ and/or Zr⁺⁴ + 2O⁻²) dissolving into the glass melt at the temperatures and viscosities that exist in the forming body's trough and along the upper walls on the outside of the forming body. The temperature of the glass is higher and its viscosity is lower at these upper portions of the forming body as compared to the forming body's lower portions since, as the glass travels down the forming surfaces, it cools and becomes more viscous. This cooling can be increased by the nature of the forming apparatus. In a typical arrangement, the forming body is enclosed in a five-sided box wherein the forming body is surrounded at the top and sides by the box walls. However, the bottom of the box is at least partially open to allow the glass sheet to descend from the forming body (i.e. the forming body root). As a result, heat is radiated through this opening by the root and areas adjacent the root, and the root subsequently cools.

The solubility and diffusivity of zirconia in a glass melt is a function of the glass temperature and viscosity (i.e., as the temperature of the glass decreases and the viscosity increases, less zirconia can be held in solution and the rate of diffusion decreases). As the glass nears the bottom (root) of the forming body, it may become supersaturated with zirconia as a result of the aforementioned cooling. Zircon crystals (i.e., secondary zircon crystals) can nucleate and grow on the bottom portion (e.g. root) of the zircon forming body. Eventually these crystals grow long enough to break off into the glass flow and become defects.

JP 02-149 437 describes a glass plate furnace with a horizontal partition wall separating the furnace chamber into an upper chamber holding the forming body and a lower chamber holding tension rollers.

### SUMMARY

To control the radiative heat loss from a forming body used to produce glass sheet, thermal shields are described that partially close an opening underneath an enclosure housing the forming body. By reducing the opening size to a narrow slit, the glass sheet is still able to descend from the forming body through the slit, while minimizing the "view" to the bottom of the forming body from outside the enclosure. That is, by reducing the extent of the line of sight into the enclosure from outside the enclosure, the ability of the forming body, and the molten glass flowing over the forming body, to radiate heat to the outside and thereby cooling the forming body and the glass, is significantly reduced.

More particularly, in an aspect of the invention, there is provided an apparatus according to claim 1.

In one embodiment an apparatus for forming a glass sheet is disclosed comprising an enclosure disposed about a forming body, the enclosure comprising an opening below the forming body to allow a flow of molten glass descending from the forming body to pass from the enclosure. The forming body may comprise any downdraw process wherein molten glass flows over a refractory surface and descends under the influence of gravity to form a ribbon that cools and forms a sheet of glass. Thermal shields are positioned below the forming body for minimizing radiative heat loss from the forming body, each thermal shields comprising segments and being movable relative to the flow of molten glass. That is, the thermal shields are positioned proximate the opening of the enclosure, and positioned close to the descending ribbon of glass to produce a narrow gap between a forward edge of the thermal shield and the ribbon. The narrow gap limits the amount of radiative heat loss from the forming body, and in particular the bottom of the forming body closest to the enclosure opening. Each thermal shield comprises a plurality of segments. The plurality of segments comprise end segments and a central segment, wherein each of the end segments and the central segment comprise a forward edge relative to the plane of the flow of molten glass, and wherein the forward edges of the end segments are recessed relative to the forward edge of the central segment. A position of the end segments is variable relative to the central segment. That is, the end segments are separate from the central segment. Moreover, each end segment may be constructed to move separately (e.g. independently) from the other end segment. Preferably, each thermal shield is separately moveable from another thermal shield.

In addition to the thermal shields, the apparatus may further comprise cooling members positioned adjacent to the thermal shields. The thermal shields may be positioned above the cooling members, or the thermal shields may be positioned below the cooling members.

Each thermal shield preferably comprises an upper member, a lower member, and an insulating layer positioned between the upper and lower members. Preferably, the upper member, the lower member, or both the upper and the lower members comprise expansion slots to prevent warping of the thermal shield (or individual segment) during a change in temperature of the shield or segment. To provide rigidity, the upper and lower members comprise interlocking curved portions.

To position the thermal shields appropriately in relationship to the opening at the bottom of the forming body enclosure, the thermal shields can be translated, pivoted, or both translated and pivoted.

The forming body constructed from a refractory material. The forming body preferably comprises ZrO₂·SiO₂ or ZrSiO₄. The forming body may comprise Al₂O₃. The forming body may comprise a fusion downdraw apparatus. Alternatively, the forming body may comprise a slot down draw process or any other current or future down draw process.

In another embodiment, a thermal shield for preventing radiative heat loss from a forming body used in a downdraw glass making process is disclosed according to claim 7. The thermal shield upper and lower members may comprise expansion slots to prevent warping of the thermal shield. The upper and lower members of the central segment may comprise curled portions that interlock and couple together the central segment upper and lower members, and wherein the interlocking curled portions form a straight edge on the central section.

In still another embodiment, a method of forming glass by a downdraw method is described comprising flowing molten glass over a forming body, the molten glass descending from the forming body in a continuous ribbon, positioning thermal shields below the forming body proximate opposing surfaces of the ribbon to reduce radiative heat loss from a lower portion of the forming body, each thermal shield comprising a plurality of segments in accordance with claim 9. A temperature difference across a thickness of each thermal shield may be at least 100°C.

To control a thickness of the sheet, cooling members may be positioned adjacent the thermal shields. The thermal shields may be positioned below the cooling members, or the thermal shields may be positioned above the cooling members. The thermal shields are preferably separately moveable from the cooling members.

The positioning of the thermal shields may comprise, for example, translating the thermal shields. Alternatively, the positioning of the thermal shields relative to the forming body enclosure may comprise pivoting the thermal shields, or both translating and pivoting.

The forming body may, for example, comprise ZrO₂·SiO₂ or ZrSiO₄. The forming body may comprise Al₂O₃.

Embodiment of the invention will be understood more easily and other objects, characteristics, details and advantages thereof will become more clearly apparent in the course of the following explanatory description, which is given, without in any way implying a limitation, with reference to the attached Figures. It is intended that all such additional systems, methods, features and advantages be included within this description, be within the scope of the present invention, and be protected by the accompanying claims.

### BRIEF DESCRIPTION OF THE DRAWINGS

FIG. 1 is a perspective view and partial cross sectional side view of an exemplary forming body in a fusion downdraw glass melting process in accordance with an embodiment of the present invention.
FIG. 2 is a cross sectional side view of an exemplary fusion forming apparatus according to an embodiment of the present invention comprising the forming body of FIG. 1 with thermal shields positioned below the cooling members.
FIG. 3 is a cross sectional view of a portion of the forming apparatus of FIG. 2.
FIG. 4 is a cross sectional side view of an exemplary fusion forming apparatus comprising the forming body of FIG. 1 with pivoting thermal shields according to another embodiment of the present invention.
FIG. 5A is a top view of a thermal shield having a single segment according to a comparative example.
FIG. 5B is a top view of a pair of thermal shields of FIG. 5A with a cross section of a sheet of glass positioned therebetween.
FIG. 6A is a top view of a thermal shield having a single segment according to a comparative example.
FIG. 6B is a top view of a pair of thermal shields of FIG. 6A with a cross section of a sheet of glass positioned therebetween.
FIG. 7A is a top view of a thermal shield having a single segment according to a comparative example.
FIG. 7B is a top view of a pair of thermal shields of FIG. 7A with a cross section of a sheet of glass positioned therebetween.
FIG. 8A is a top view of a thermal shield having a multiple segments according to an embodiment of the present invention.
FIG. 8B is a top view of a pair of thermal shields of FIG. 8A with a cross section of a sheet of glass positioned therebetween.
FIG. 9A is a top view of a thermal shield having a multiple segments according to another embodiment of the present invention.
FIG. 9B is a top view of a pair of thermal shields of FIG. 9A with a cross section of a sheet of glass positioned therebetween.
FIG. 10 is a cross sectional side view of a portion of a thermal shield segment showing a layered construction.
FIG. 11 is a top view of a portion of a thermal shield segment showing expansion slots.
FIG. 12 is a cross sectional side view of an exemplary fusion forming apparatus comprising the forming body of FIG. 1 with thermal shields positioned above the cooling members according to still another embodiment of the invention.

### Detailed Description

In the following detailed description, for purposes of explanation and not limitation, example embodiments disclosing specific details are set forth to provide a thorough understanding of the present invention. However, it will be apparent to one having ordinary skill in the art, having had the benefit of the present disclosure, that the present invention may be practiced in other embodiments that depart from the specific details disclosed herein. Moreover, descriptions of well-known devices, methods and materials may be omitted so as not to obscure the description of the present invention. Finally, wherever applicable, like reference numerals refer to like elements.

In an exemplary fusion downdraw process for making a glass sheet in accordance with embodiments of the present invention, glass forming precursors (batch) are melted in a furnace to form a molten raw material, or glass melt, which is thereafter flowed over a forming body to form the glass sheet. Generally, such forming bodies include upper forming surfaces over which the melt flows. For example, in a fusion downdraw sheet forming process the melt flows over forming surfaces that intersect at the bottom of the forming body. The forming surfaces comprise inclined or converging forming surfaces that converge at the bottom or root of the forming body to form a wedge shape. Upper forming surfaces may be substantially vertical and parallel with one another

The design of the forming body must take into consideration a number of competing interests. Molten raw material is introduced into a trough in the forming body bounded at its sides by dams (weirs). The molten raw material must be introduced to the forming body at a viscosity low enough, that is, at a high enough temperature, to produce an even flow of glass melt over the tops of the weirs (upper walls bounding the trough). The molten raw material then flows down the exterior forming surfaces of the forming body, including the converging forming surfaces, to the bottom of the body.

On the other hand, the molten raw material leaving the bottom or root of the forming body must have a viscosity high enough - at a low enough temperature - to allow the molten raw material to be drawn successfully, yet not so low that the viscosity of the molten raw material exceeds the liquidus viscosity of the molten raw material, which can cause the glass melt to crystallize.

If the glass melt overflowing the forming body remains at a high temperature for too long a time as it descends the forming surfaces; the material comprising the forming body may dissolve, then re-crystallize as "secondary zircon" at a lower, colder portion of the forming body, such as the root. Secondary zircon crystals may grow long enough to break off and become entrained in the glass flow, resulting in a defect in the finished glass product.

This is particularly troublesome because the root is proximate an opening at the bottom of the enclosure housing the forming body through which the molten glass exits the enclosure, and loses heat by radiation through the opening. Since the opening is necessary, efforts must be undertaken to mitigate radiative heat loss from the forming body, and especially from the forming body root. One approach is to heat the root to make up for the heat loss, but this is only partially effective. Moreover, the additional heat energy applied to the root flows upward via convection, and may increase the temperature of the upper portions of the forming body. An increased temperature at the top of the forming body may in fact prove counter productive, as the increased upper temperature can lead to increased dissolution of the forming body, exacerbating a secondary zircon problem. It can also change the delicate balance between the upper and lower viscosity of the glass (the viscosity at the top of the forming body and the viscosity at the bottom of the forming body). IT should be noted that the mechanism for formation of secondary zircon is applicable to the dissolution and condensation of other forming body materials and not limited to zirconia.

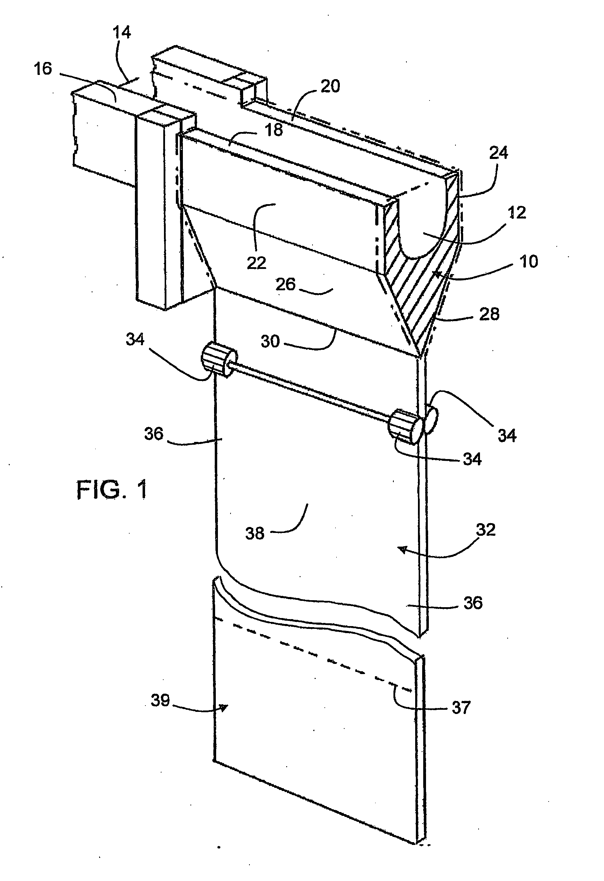

FIG. 1 depicts an exemplary forming body 10 according to one embodiment. Forming body 10 comprises trough 12 for receiving molten glass 14 from a supply (not shown) through inlet 16, weirs 18, 20, upper forming surfaces 22, 24 and lower forming surfaces 26, 28. Lower forming surfaces 26, 28 intersect at the bottom or root 30 of the forming body. Root 30 forms a draw line, or a line from which the glass sheet is drawn from the forming body.

Glass melt 14 supplied to forming body 10 overflows weirs 18, 20, and flows down forming surfaces 22, 24 and 26, 28 as two distinct flows, one flow descending down each long side of the forming body. Thus, one flow descends over forming surfaces 22 and 26, while the other flow descends over forming surfaces 24, and 28. The two glass flows re-unite or fuse at root 30 to form glass sheet 32 that is drawn downward by pulling equipment, represented by pulling rolls 34. Surface tension causes edge portions 36 of the sheet to become thicker than the inner portion 38 of the sheet. The thicker edge portions, or beads, are gripped by the pulling rolls disposed downstream of the forming body, the pulling rolls exerting a downward pulling force on the glass sheet. The region 38 of the glass sheet inward of the beads is the region that subsequently becomes the saleable glass, whereas the bead regions 36 are cut from the glass and discarded, or used as cullet and added to the batch materials in the melting process. The descending glass sheet 32 is eventually separated at cutting line 37 into individual glass panes 39.

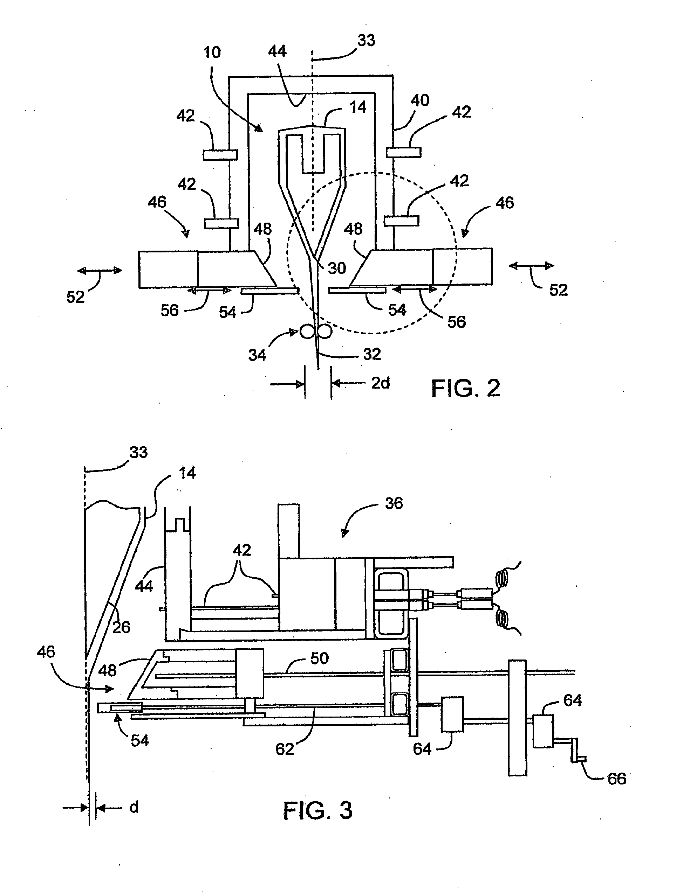

Forming body 10 is typically comprised of a ceramic refractory material, such as zircon or alumina and housed in enclosure 40 (see FIG. 2). Enclosure 40 comprises heating elements 42 arranged behind interior walls (muffle 44). The heating elements are used to control the temperature of the molten glass on the forming surfaces of the forming body, and hence the viscosity of the molten glass, and may be arranged throughout the enclosure as needed. Typically, the heating elements are in banks arranged vertically so that the temperature within the enclosure can be controlled as a function of vertical position in the enclosure.

Cooling members 46 are located below enclosure 40 and may be movable so that the members can be positioned an appropriate distance from descending glass sheet 32, and are best seen with the aid of FIG. 3 showing a portion of FIG.2 surrounded by the dashed circle. Dashed line 33 represents a plane bisecting the forming body and passing through root 30 and the flow of molten glass 32. Cooling members 46 contain cooling equipment that cools surfaces of the cooling members and in particular the faces 48 of the cooling members. Cooling of the cooling member faces 48 in turn controls the temperature and therefore the viscosity of the glass descending from the forming body along the width of the glass (e.g. horizontally). For example, the cooling members may contain one or more coolant supply lines 50 and outlets that extend along the length of the cooling members. Each outlet emits a coolant (typically air) that cools a portion of each cooling member face 48 adjacent to the outlet. The volume of coolant emitted by each outlet may be individually controlled so that the temperature of the cooling member face can be controlled as a function of location on the face (e.g. horizontal location). In some embodiments, a single supply line may feed a header comprising a plurality of outlets, each outlet being controlled by a remotely controlled valve.

The cooling arrangement described above allows the cooling member faces 48 to vary the temperature and viscosity of the glass descending from the forming body as a function of location across the width of the glass sheet, and can be used, for example, to control the across-the-sheet thickness of the glass. While the cooling members are capable of horizontal translation (represented by arrows 52) to enable positioning the cooling members relative to the major surfaces of the glass sheet, once an optimum position is set, the cooling members are seldom moved, since such movement can affect sheet attributes (e.g. shape, thickness, etc.). Rather, functionality of the cooling members is derived largely by controlling the flow of coolant to the cooling members and therefore temperature. The optimum position depends on the particular draw setup, and may vary from draw to draw.

To provide finer control of the thermal environment within enclosure 40, and in particular the temperature of the root 30 of the forming body, thermal shields 54 are positioned adjacent cooling members 46, either above or below the cooling members, to control radiative heat loss from the forming body, and in particular radiative heat loss from the root region of the forming body, Thermal shields 54 are preferably independently movable. That is, one thermal shield is movable independently from the opposite thermal shield (on the other side of the sheet), and like the cooling members, are capable of movement, toward the glass sheet, and outward, away from the glass sheet. Movement toward or away from the sheet can be provided for in several ways.

As can be appreciated by the above description, the both cooling and heating can occur simultaneously in regions quite close to each other. Thermal shields 54 minimize radiate heat loss from the bottom of the forming body to prevent cooling of the molten glass at the root of the forming body, whereas cooling members 46 are used to actively cool the glass across a width of the descending sheet as an aid to thickness control. Indeed, the operation of cooling members 46 and thermal shields 54 can be coordinated to maintain a specific thermal environment.

As shown in FIG. 2, movement of the thermal shields can be performed horizontally, wherein the thermal shields translate to increase or decrease the gap between the thermal shields. Such horizontal movement is represented by arrows 56.

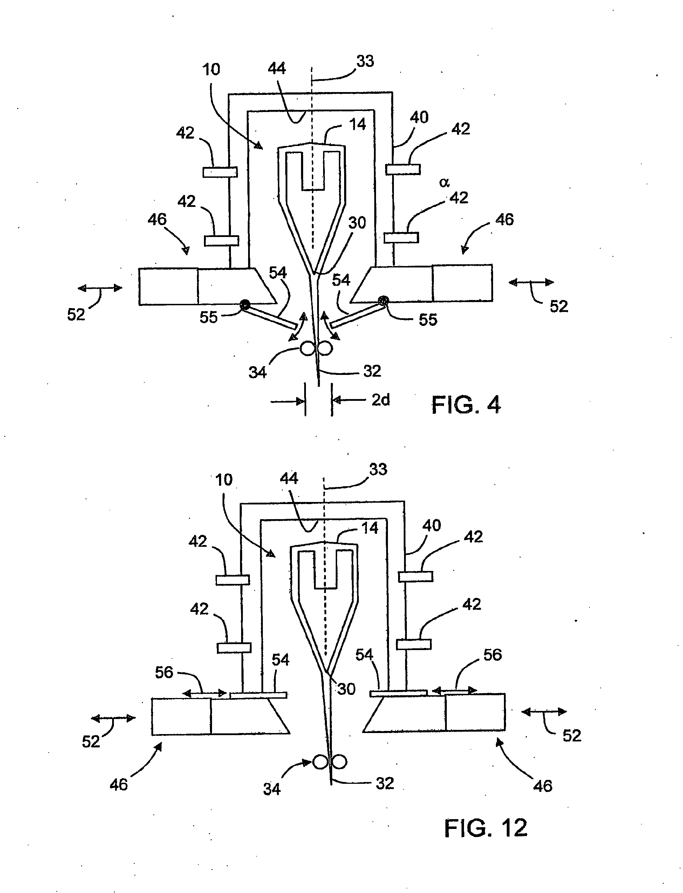

In another embodiment, illustrated in FIG. 4, the thermal shields may be pivoted about pivots 55. Each pivot 55 is preferably along an edge of each thermal shield farthest away from the flow of molten glass so that the forward edge of each thermal shield closest to the molten glass can be dropped downward.

In still another embodiment (not shown), the thermal shields may be both translated and pivoted.

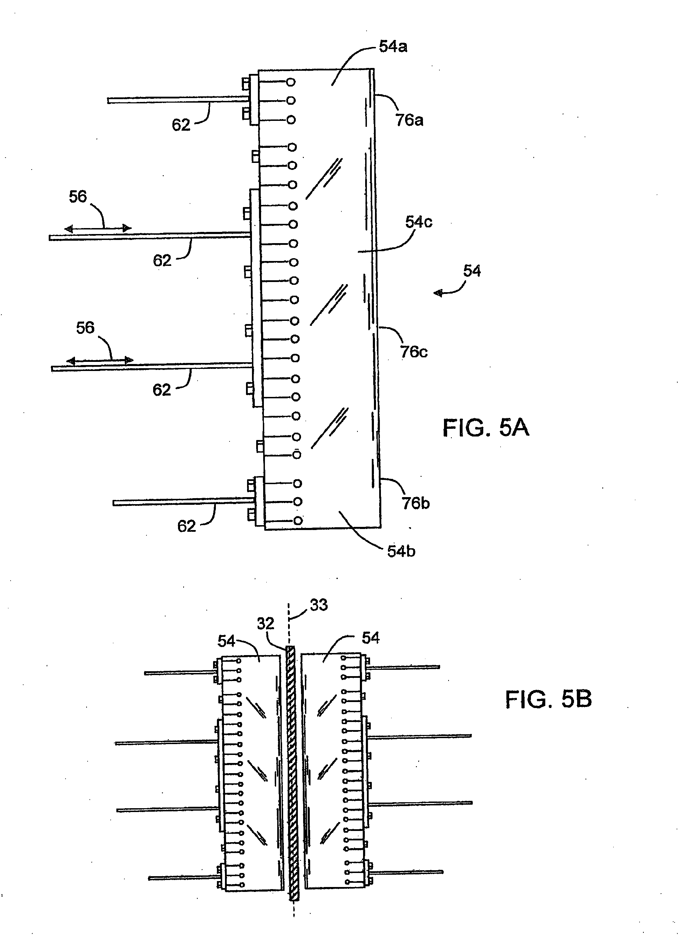

Each thermal shield comprises a plurality of segments. In one comparative example illustrated in FIG. 5A, each thermal shield comprises a single segment comprising end portions 54a, 54b and a central portion 54c. The forward edges 76a, 76b of the end portions may be in line with the central portion, but preferably are recessed such that the forward edge of the end portions are farther from the plane of the flow of molten glass than the forward edge of the central portion. FIG. 5B depicts a pair of thermal shields of FIG. 5A with a cross sectional view of a ribbon of glass passing between the thermal shields.

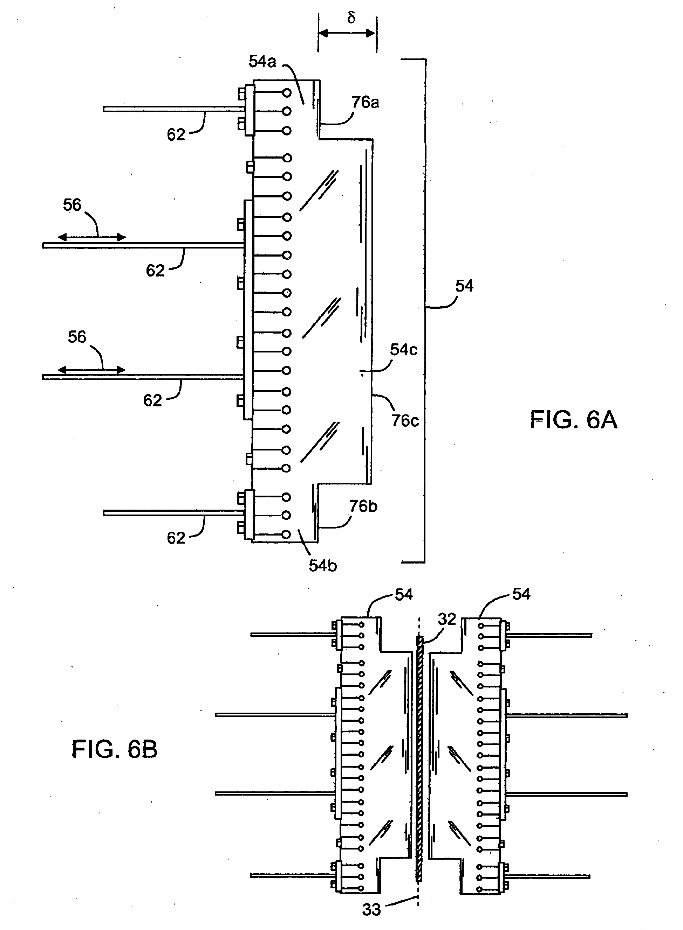

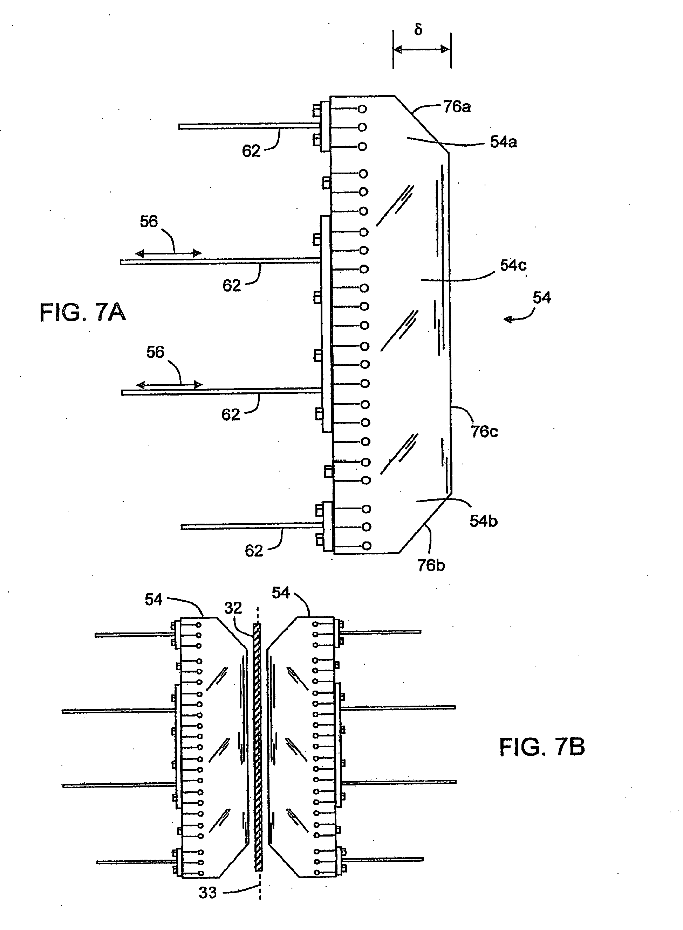

FIGS. 6A and 7A depict alternative comparative examples of the single segment thermal shield and illustrate recessed end portions. For example, FIG. 6 shows an example wherein the forward edge portions 76a, 76b of each of the end portions 54a, 54b are recessed behind forward edge portion 76a of central portion 54c by distance δ. In this example, each of the forward edge portions 76a - 76c is parallel with the other forward edge portions of the segment.

FIG. 7A depicts a comparative example wherein the forward edges 76a, 76b of end portions 54a, 54b, respectively are both recessed and angled relative to the forward edge 76c of the central portion 54c. Other configurations may also be employed, such as wherein the forward edges of the end portions comprise a curved edge.

FIGS. 6B and 7B depict a pair of thermal shields of FIGS. 6A and 7A, respectively, with a cross sectional view of a ribbon of glass passing between the thermal shields.

In other embodiments, each thermal shield comprises a plurality of segments or blades. Each segment of each thermal shield may be moveable independently from an adjacent section. As each thermal shield is essentially identical to the other (opposite) shield in construction, reference will be made to a single thermal shield, with the understanding that

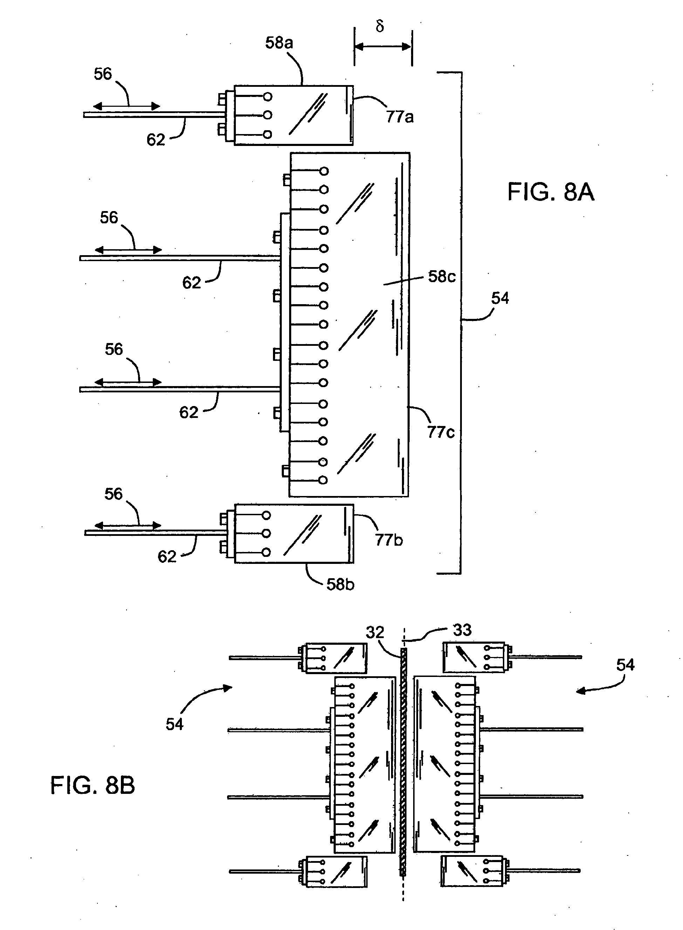

FIG. 8A depicts an embodiment of an exemplary segmented thermal shield 54. Segmented thermal shield 54 comprises segments comprising end members 58a, 58b and central member 58c. End members 58a, 58b are separately movable relative to central member 58c. In addition, end member 58a may be separately movable from end member 58b, although typically end members 58a, 58b are moved in unison, and may also be moved in unison with central member 58c. Movement can be accomplished by a number of methods. For example, each segment of the thermal shield may be connected via an appropriate linkage 62 (e.g. shaft or shafts 62) and/or gearbox or gearboxes 64 to an actuator 66 that can be manipulated to cause the section or sections to extend inward, toward the glass sheet, or outward, away from the glass sheet. For example, actuator 66 may be a simple hand crank or lever, or the actuator may be an electric motor or servo, and if preferred, controlled via a computer or other electronic processor. FIG. 8B depicts a pair of thermal shields of FIG. 8A as the shields would be deployed with a cross sectional view of a ribbon of glass passing between the thermal shields.

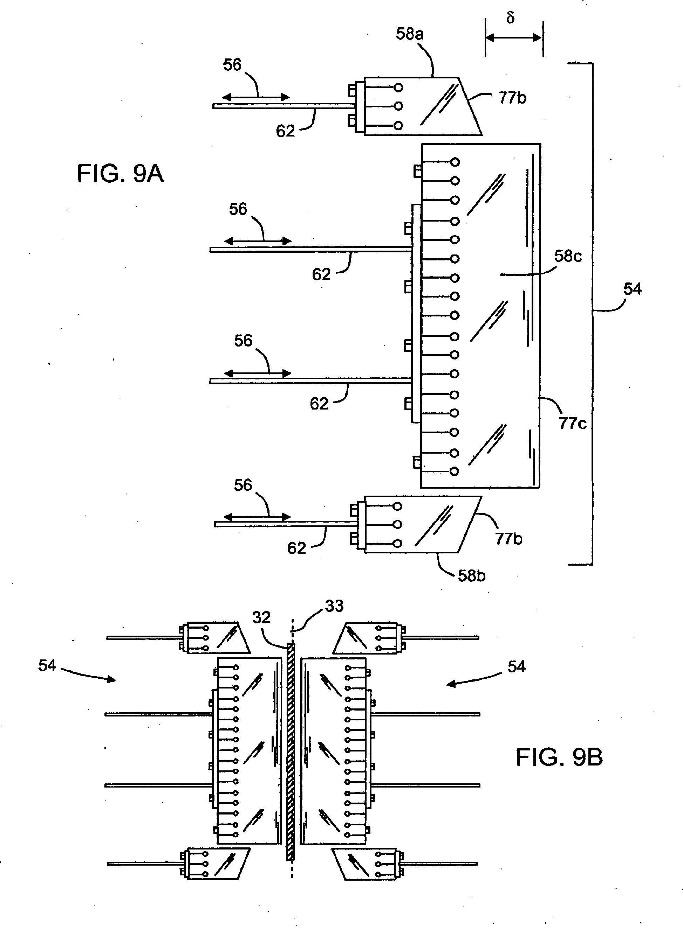

FIG. 9A illustrates a multi-segment thermal shield 54 similar to the thermal shield of FIG. 8A, except that end members 58a, 58b comprise forward edges 77a, 77b that are both angled and recessed relative to forward edge 77c of central member 58c. FIG. 9B depicts a pair of thermal shields of FIG. 9A with a cross sectional view of a ribbon of glass passing between the thermal shields.

As described briefly above, the drawing of glass sheet via a fusion downdraw process utilizes precise control of the thermal environment surrounding the glass as it descends from the forming body. To that end, each thermal shield may include features to maintain the dimensional integrity of the thermal shields. Variations in the shape or position of a thermal shield could otherwise vary process temperatures. For example, warping of any part of the thermal shield can cause an upset in the thermal environment.

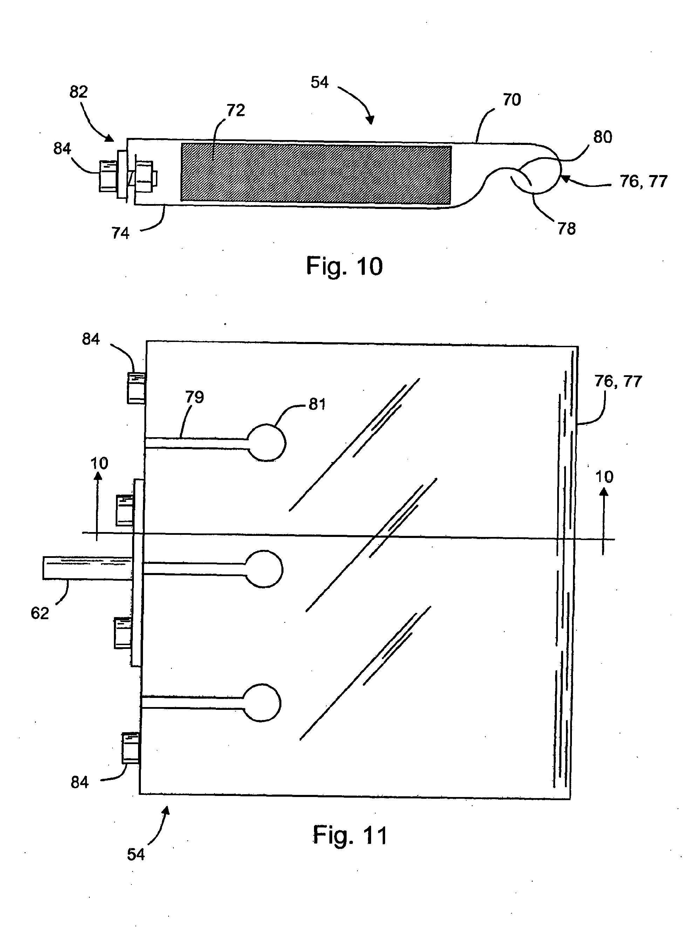

As shown in FIG. 10 generically depicting a portion of a thermal shield in cross section, each segment or portion of thermal shield 54, either a single segment shield or a multiple segment shield, may itself be formed by a plurality of members: upper member 70, an insulating middle layer or member 72 and a lower member 74. The upper and lower members 70, 74 are coupled along front or forward edge 77 (or 76 for single segment embodiments), where the front edge is the edge closest to the flowing glass, via interlocking bends 78, 80 formed in the upper and lower members respectively. The interlocking bends have several purposes. Foremost; they join the upper and lower segments. However, they also aid in stiffening the forward edge 77 (or forward edge 76) of each portion or segment and prevent warping of the edge. Even a small amount of warping can be detrimental to the process by varying slightly the location of the thermal shield edge relative to the glass sheet. However, the central portion or segment of each embodiment comprises a straight (linear) forward edge.

As illustrated in FIG. 11, each of the upper members 70 and lower members 74 of the end segments and the central segment preferably comprise expansion slots 79 to facilitate expansion of the upper and lower members without leading to warping of the individual portions or segments. Each expansion slot may also terminate at a cutout 81, such as a circular cutout, to prevent stress fractures of the members at the ends of the slots.

Upper and lower members 70, 74 are also connected along the back edge 82. As shown in FIG. 10, the connection along back edge 82 may be via fasteners 84, such as bolts, arranged along the edge. However, other methods of fastening the upper and lower members along the back edge may also be employed, such as by welding. Because the thermal shield is deployed in a high temperature environment (the temperature at the upper member may be about 1000°C and the temperature at the lower member may be about 900°C), the upper and lower members should be constructed from a material resistant to high temperature and oxidation to ensure an adequate lifetime. For example, upper members and lower members 70, 74 may comprise one or more high temperature metal alloys such as Haynes® Alloy No. 214 or Haynes® Alloy No. 230. An insulating material, such as Fiberfrax® Durablanket® 2600 for example, is a suitable insulating material for insulating layer 72. Since the upper member is exposed to higher temperatures than the lower member, the upper member may be formed from a material having a greater resistance to heat and oxidation than the lower member. Although a typical temperature difference across the thickness of the thermal shields is about 100°C, the temperature difference may be greater than 100°C.

The temperature of the glass melt flowing down forming surfaces 20, 22 is substantially constant. On the other hand, forming surfaces 24, 26 are exposed to the cooler temperatures below the forming body. That is, the forming surfaces 24, 26 have a horizontal component to their orientation as well as a vertical component. Thus, the molten glass flowing over forming surfaces 24, 26 cools as it descends the forming surfaces. The lowest portions of the forming body, e.g. the root and the areas adjacent the root have a "view" to the opening at the bottom of the enclosure and radiate heat through the opening that undesirably cools the root and the molten glass at the root.

As described above, to prevent disruption to the thermal environment surrounding the quality region of the glass sheet, front edge 77c of central segment 58c of the thermal shield is a straight, flat edge. It is preferred that the forward edge of the central segment extends at least across the quality portion of the glass sheet to ensure a consistent thermal environment across the width of the sheet. In operation, the forward edges 77a and 77b of end members 58a, 58b are typically recessed a distance δ behind the forward edge 77c of the central segment 58c. The positioning of end members 58a, 58b and their respective forward edges farther from the glass sheet than the central segment both accommodates an increased thickness of the bead regions of the glass sheet, and can also provide additional clearance for the forming body itself.. The distance δ is determined separately for each draw depending on the particular design, the set up of the forming body and draw equipment, and the composition of the glass being drawn. Similarly, the distance d between central segment forward edge 77 and the surface of the glass sheet should be selected to minimize heat loss from the enclosure, while at the same time preventing disruption to the flow of the sheet, and is typically dependent on the particular operating conditions of each individual forming body, the associated draw equipment and the glass composition.

In another embodiment depicted in FIG. 12, the thermal shields are positioned below root 30 of the forming body, but above cooling members 46. As in the previous embodiments, each thermal shield 54 of the embodiment of FIG. 12 comprises a plurality of segments, including end segments and a central segment, wherein the end segments are separately moveable from the central segment, but may be moved in unison with the central segment. Preferably, the central segment extends at least across the width of the quality region of the glass sheet. The end segments are configured so that a front edge of the end segments are recessed further from the glass sheet than the central segment.

## Claims

1. An apparatus for forming a glass sheet (32) comprising an enclosure (40) disposed about a forming body (10), the enclosure comprising an opening below the forming body to allow a flow of molten glass descending from the forming body to pass from the enclosure, the apparatus further comprising:
thermal shields (54) positioned below the forming body for minimizing radiative heat loss from the forming body,
**characterised in that** each thermal shield comprises a plurality of separate segments comprising end segments (58a, 58b) and a central segment (58c), each of the end segments and the central segment comprising a forward edge (77a - 77c) relative to the flow of molten glass, wherein the end segments are independently movable relative to the central segment; and
wherein the forward edges (77a, 77b) of the end segments are recessed relative to the forward edge (76c) of the central segment.

2. The apparatus according to claim 1, wherein a position of each segment of the plurality of segments is independently variable relative to another segment of the plurality of segments.

3. The apparatus according to claim 1, further comprising cooling members (46) positioned adjacent to the thermal shields.

4. The apparatus according to claim 1, wherein each thermal shield comprises an upper member (70), a lower member (74), and an insulating layer (72) positioned between the upper and lower members.

5. The apparatus according to claim 4, wherein the upper member and the lower member comprise expansion slots (81).

6. The apparatus according to claim 4, wherein the upper and lower members comprise interlocking curved portions (78, 80).

7. A thermal shield (54) for preventing radiative heat loss from a forming body (10) used in a downdraw glass making process, the thermal shield comprising:
a plurality of segments comprising first and second end segments, and a central segment, each of the first and second end segments and the central segment comprising a forward edge portion (77a - 77c);
wherein the forward edge portions (77a, 77b) of the first and second end segments (58a, 58b) are recessed relative to the forward edge portion (77c) of the central segment; and
the end segments are movable independently relative to the central segment (77c).

8. The thermal shield according to claim 7, wherein each thermal shield comprises an upper member (70), a lower member (74), and an insulating layer (72) positioned between the upper and lower members, and the upper and lower members comprise expansion slots (81).

9. A method of forming glass by a downdraw method comprising:
flowing molten glass over a forming body (10), the molten glass descending from the forming body in a continuous ribbon;
positioning thermal shields (54) below the forming body proximate opposing surfaces of the ribbon to reduce radiative heat loss from a lower portion of the forming body, each thermal shield comprising a plurality of segments comprising end segments (58a, 58b) and a central segment (58c); and
wherein a front edge (77a, 77b) of the end segments is recessed farther from the ribbon than a front edge (77c) of the central segment;
**characterised by** moving the end segments independently of the central segment.

10. The method according to claim 9, wherein a distance between the front edge of each end segment and the ribbon varies.

## Patentansprüche

1. Eine Einrichtung zum Formen einer Glasplatte (32) bestehend aus einem Gehäuse (40) um eine Formvorrichtung (10), wobei das Gehäuse unterhalb der Formvorrichtung eine Öffnung hat, damit geschmolzenes Glas, das von der Formvorrichtung abfließt, aus der Öffnung fließen kann, wobei die Einrichtung zudem Folgendes umfasst:
Hitzeschilder (54), die unter der Formvorrichtung positioniert sind, um Wärmestrahlungsverlust von der Formvorrichtung auf einem Minimum zu halten,
**dadurch gekennzeichnet**, das jedes Hitzeschild sich aus mehreren separaten Segmenten bestehend aus Endsegmenten (58a, 58b) und einem mittleren Segment (58c) zusammensetzt, wobei jedes der Endsegmente und das mittlere Segment (77a - 77c) eine Vorderkante relativ zum fließenden geschmolzenen Glas haben, wobei die Endsegmente relativ zum mittleren Segment unabhängig bewegt werden können, und
wobei die Vorderkanten (77a, 77b) der Endsegmente relativ zur Vorderkante (77c) des mittleren Segments weiter zurückgesetzt sind.

2. Die Einrichtung entsprechend Anspruch 1, wobei eine Position jedes Segments der mehreren Segmente relativ zu einem anderen Segment der mehreren Segmente unabhängig variiert werden kann.

3. Die Einrichtung entsprechend Anspruch 1, zu der weiterhin Kühlelemente (46) gehören, die neben den Hitzeschildem positioniert sind.

4. Die Einrichtung entsprechend Anspruch 1, wobei jedes Hitzeschild ein oberes Element (70), eine unteres Element (74) und eine Isolierschicht (72) zwischen dem oberen und dem unteren Element aufweist.

5. Die Einrichtung entsprechend Anspruch 4, wobei das obere Element und das untere Element Erweiterungsschlitze (81) aufweisen.

6. Die Einrichtung entsprechend Anspruch 4, wobei das obere Element und das untere Element ineinandergreifende, bogenförmige Abschnitte (78, 80) aufweisen.

7. Ein Hitzeschild (54) zur Verhinderung von Strahlungswärmeverlust von einer Formvorrichtung (10), die bei der Glasherstellung im Down-Draw-Verfahren, wobei das Hitzeschild folgendes umfasst:
mehrere Segmente bestehend aus einem ersten und einem zweiten Endsegment und einem mittleren Segment, wobei das erste und zweite Endsegment und das mittlere Segment jeweils eine Vorderkante (77a - 77c) aufweisen;
wobei die Vorderkanten (77a, 77b) des ersten und zweiten Endsegments (58a, 58b) relativ zur Vorderkante (77c) des mittleren Segments weiter zurückgesetzt sind; und
die Endsegmente relativ zum mittleren Segment (77c) unabhängig bewegt werden können.

8. Das Hitzeschild entsprechend Anspruch 7, wobei jedes Hitzeschild ein oberes Element (70), eine unteres Element (74) und eine Isolierschicht (72) zwischen dem oberen und dem unteren Element aufweist und das obere und das untere Element Erweiterungsschlitze (81) aufweisen.

9. Ein Verfahren zur Glasherstellung im Down-Draw-Verfahren bestehend aus:
Fließen von geschmolzenem Glas über eine Formvorrichtung (10), wobei das geschmolzene Glas von der Formvorrichtung als fortlaufendes Band abfließt;
Positionieren von Hitzeschildem (54) unterhalb der Formvorrichtung neben gegenüberliegenden Flächen des Bandes, um Wärmestrahlungsverlust von einem unteren Abschnitt der Formvorrichtung zu reduzieren, wobei jedes Hitzeschild mehrere Segmente bestehend aus Endsegmenten (58a, 58b) und einem mittleren Segment (58c) aufweist; und
wobei eine Vorderkante (77a, 77b) der Endsegmente vom Band weiter zurückgesetzt ist als die Vorderkante (77c) des mittleren Segments;
**dadurch gekennzeichnet, dass** die Endsegmente unabhängig vom mittleren Segment bewegt werden können.

10. Das Verfahren entsprechend Anspruch 9, wobei ein Abstand zwischen der Vorderkante jedes Endsegments und dem Band variiert.

## Revendications

1. Appareil pour former une plaque de verre (32) comprenant un boîtier (40) disposé autour d'un corps de formage (10), le boîtier comprenant une ouverture au-dessous du corps de formage pour permettre à un écoulement de verre fondu descendant du corps de formage de passer dans le boîtier, l'appareil comprenant en outre :
des écrans thermiques (54) positionnés en dessous du corps de formage pour minimiser la perte de chaleur par rayonnement du corps de formage,
**caractérisé en ce que** chaque écran thermique comprend une pluralité de segments séparés comprenant des segments d'extrémité (58a, 58b) et un segment central (58c), chacun des segments d'extrémité et le segment central comprenant un bord avant (77a-77c) par rapport à l'écoulement du verre fondu, dans lequel les segments d'extrémité sont mobiles indépendamment par rapport au segment central, et
dans lequel les bords avant (77a, 77b) des segments d'extrémité sont en retrait par rapport au bord avant (76c) du segment central.

2. Appareil selon la revendication 1, dans lequel une position de chaque segment de la pluralité de segments est indépendamment variable par rapport à un autre segment de la pluralité de segments.

3. Appareil selon la revendication 1, comprenant en outre des éléments de refroidissement (46) positionnés de manière adjacente aux écrans thermiques.

4. Appareil selon la revendication 1, dans lequel chaque écran thermique comprend un élément supérieur (70), un élément inférieur (74) et une couche isolante (72) positionnée entre les éléments supérieurs et inférieurs.

5. Appareil selon la revendication 4, dans lequel l'élément supérieur et l'élément inférieur comportent des fentes de dilatation (81).

6. Appareil selon la revendication 4, dans lequel les éléments supérieurs et inférieurs comprennent des parties incurvées s'interpénétrant (78, 80).

7. Écran thermique (54) pour empêcher les pertes de chaleur par rayonnement à partir d'un corps de formage (10) utilisé dans un procédé d'étirage par le bas pour la fabrication du verre, l'écran thermique comprenant :
une pluralité de segments comprenant des premiers et seconds segments d'extrémité, et un segment central, chacun des premiers et seconds segments d'extrémité et le segment central comprenant une partie de bord avant (77a-77c) ;
dans lequel les parties de bord avant (77a, 77b) des premiers et seconds segments d'extrémité (58a, 58b) sont en retrait par rapport à la partie de bord avant (77c) du segment central et les segments d'extrémité sont mobiles indépendamment par rapport au segment central (77c).

8. Écran thermique selon la revendication 7, dans lequel chaque écran thermique comprend un élément supérieur (70), un élément inférieur (74) et une couche isolante (72) positionnée entre les éléments supérieurs et inférieurs et les éléments supérieurs et inférieurs comprennent des fentes de dilatation (81).

9. Procédé de fabrication du verre par un procédé d'étirage par le bas comprenant :
l'écoulement du verre fondu sur un corps de formage (10), le verre fondu descendant à partir du corps en formant une feuille continue ;
le placement d'écrans thermiques (54) au-dessous du corps de formage à proximité des surfaces opposées de la feuille pour réduire la perte de chaleur par rayonnement à partir d'une portion inférieure du corps de formage, chaque écran thermique comprenant une pluralité de segments comprenant des segments d'extrémité (58a, 58b) et un segment central (58c), et
dans lequel un bord avant (77a, 77b) des segments d'extrémité est en retrait plus éloigné de la feuille qu'un bord avant (77c) du segment central ;
**caractérisé par** le déplacement des segments d'extrémité de façon indépendante du segment central.

10. Procédé selon la revendication 9, dans lequel une distance entre le bord avant de chaque segment d'extrémité et la feuille varie.
